Europäisches Patentamt

European Patent Office

Office européen des brevets

(19)

(11) Veröffentlichungsnummer: **0 223 074**
**A2**

(12) # EUROPÄISCHE PATENTANMELDUNG

(21) Anmeldenummer: **86114346.9**

(22) Anmeldetag: **16.10.86**

(51) Int. Cl.⁴: **B 29 C 45/20**

(30) Priorität: **16.10.85 DE 3536772**

(43) Veröffentlichungstag der Anmeldung: **27.05.87**
**Patentblatt 87/22**

(84) Benannte Vertragsstaaten: **AT BE CH ES FR GB IT LI NL SE**

(71) Anmelder: **Stübbe GmbH, Ismaninger Str. 67a, D-8000 München 80 (DE)**

(72) Erfinder: **Kaaden, Hans-Heinrich, Friedrich-Herschel-Strasse 5, D-8000 München 80 (DE)**

(74) Vertreter: **Schirmer, Siegfried, Osningstrasse 10, D-4800 Bielefeld 1 (DE)**

(54) **Spritzgiessmaschine zum Herstellen von Kunststoffteilen im Spritzgiess- oder Reaktionsspritzgiessverfahren.**

(57)     Durch die vorliegende Zusatzerfindung soll eine Trennung der mittleren geteilten bewegbaren Formaufspannplatte von der zugeordneten Schneckeneinheit mit einem geringen konstruktiven Aufwand ermöglicht werden, in dem an die Schneckeneinheit ein rechtwinkliger Adapter 1 angeschlossen ist, an dem ein in Spritzrichtung in sich verfahrbares Verschlußdüsensystem angeordnet ist und das erforderliche Schmelzeausgleichssystem durch das Hubvolumen der Schneckeneinheit gebildet ist.

    Hierbei ist das Verschlußdüsensystem aus einem Hydraulikzylinder 2 mit Flansch 2', einer innenliegenden Torpedoführungshülse 3 mit einem innenbeheizten verfahrbaren Torpedo 4 sowie einer verfahrbaren Düsenplatte 5 mit beheizbarer Verschlußdüse 6 gebildet.

0223074

Patentanwalt
**Dipl.-Ing. Siegfried Schirmer**
Zugelassener Vertreter
vor dem Europäischen Patentamt

Osningstraße 10
4900 Bielefeld 1
Telefon (05 21) 29 57 62
18.09.1986
755/58-99

**Anmelder:**
**Stübbe GmbH**
**Ismaninger Straße 67 a**
**8000 München 80**

**Spritzgießmaschine zum Herstellen von Kunststoffteilen**
**im Spritzgieß- oder Reaktionsspritzgießverfahren**

Die Erfindung betrifft eine Spritzgießmaschine zum Herstellen von Kunststoffteilen aus Thermoplasten, Duroplasten und/oder Elastomeren im Spritzgießverfahren oder Reaktionsspritzgießverfahren, mit einer Mehrstationen-Schließeinheit in horizontaler oder vertikaler Bauweise zur Aufnahme mehrerer Formen und mit einer zugeordneten Spritzeinheit zum gleichzeitigen Abspritzen der Formen, mit einer bewegbaren mittleren längs zur Schließrichtung geteilten Formaufspannplatte, deren beide Teile durch eine Schnellspannvorrichtung zusammengehalten sind und zwischen deren beiden Teilen ein Schmelzeleitsystem angeordnet ist, das eine oder mehrere separate Schmelzeleitschienen aufweist, wobei jede Schmelzeleitschiene an ihrer Stirnseite längs zur Fließrichtung der Schmelze fest zwischen der geteilt ausgebildeten Formaufspannplatte eingespannt ist und auf einem Flansch der Schmelzeleitschiene ein mittiger Zentrierbund und ein aufgeweiteter, gerundete Seitenwandungen aufweisender Schmelzeeintritt zur Aufnahme des jeweiligen Düsensystems angeordnet ist.

- 2 -

Durch die Anordnung von einer oder mehreren separaten Schmelzeleitschienen zwischen den Teilen der mittleren längs zur Schließrichtung geteilten Formaufspannplatten ist bei jeder Gestaltung der Form eine gleichmäßige Abspritzung beider Formen gewährleistet. Die Ausbildung der mittleren Formaufspannplatte mit Schmelzeleitschienen erfordert nunmehr Überlegungen, wie das Verschlußdüsensystem zweckmäßigerweise ausgebildet und angeordnet werden kann.

Es wurde bereits vorgeschlagen, zur Trennung der mittleren geteilten bewegbaren Formaufspannplatte von der zugeordneten Schneckeneinheit, die für eine Entnahme der Formteile aus den Formen Voraussetzung ist, auf der Stirnseite der Schmelzeleitschiene ein in Spritzrichtung in sich verfahrbares Verschlußdüsensystem fest anzuordnen, dem innerhalb der Schmelzeleitschiene ein Schmelzeausgleichssystem zugeordnet ist.

Durch die bereits vorgeschlagene Ausbildung ist die Möglichkeit geschaffen, innerhalb des Fertigungszyklus die Spritzeinheit mit einer oder mehreren Schneckeneinheiten in einer festen Spritzposition zu belassen. Die für die Entnahme der Formteile aus den Formen erforderliche Trennung der mittleren geteilten bewegbaren Formaufspannplatte von der zugeordneten Schneckeneinheit erfolgt durch das Zurückfahren des in sich verfahrbaren Verschlußdüsensystems. Da das Zurückfahren des Verschlußdüsensystems nur über einen minimalen Weg erforderlich ist, erfolgt das Trennen und auch der Wiederanschluß in kürzester Zeit.

Das hierfür erforderliche Schmelzeausgleichssystem wird durch eine Schmelzekammer mit zugeordnetem Hydraulikzylinder mit Kolben, Kolbenstange sowie Führungshülse gebildet und ist damit relativ aufwendig.

Der Erfindung liegt die Aufgabe zugrunde, eine Trennung der mittleren geteilten bewegbaren Formaufspannplatte von der zugeordneten Schneckeneinheit auch ohne die Anordnung eines zusätzlichen Schmelzeausgleichssystems zu erreichen bei gleichzeitiger Reduzierung des konstruktiv erforderlichen Aufwands.

Diese Aufgabe wird erfindungsgemäß dadurch gelöst, daß an die Schneckeneinheit ein rechtwinkliger Adapter angeschlossen ist, an dem ein in Spritzrichtung in sich verfahrbares Verschlußdüsensystem fest angeordnet ist und das erforderliche Schmelzeausgleichssystem durch das Hubvolumen der Schneckeneinheit gebildet ist.

In Ausgestaltung der Erfindung ist das Verschlußdüsensystem aus einem Hydraulikzylinder mit Flansch, einer innenliegenden Torpedoführungshülse mit einem innenbeheizten verfahrbaren Torpedo sowie einer verfahrbaren Düsenplatte mit beheizbarer Verschlußdüse gebildet. Der Hydraulikzylinder kann mit seinem Flansch sowie die Torpedoführungshülse an einem Montageflansch des Adapters lösbar angeschlossen sein. Vorteilhafterweise ist der verfahrbare Kolben des Hydraulikzylinders als Kolbenring ausgebildet, auf dem die Düsenplatte lösbar angeschlossen sein kann.

Zweckmäßige Ausgestaltungen der Erfindung ergeben sich aus den weiteren Unteransprüchen.

Durch die erfindungsgemäße Ausbildung ist eine mit geringem Aufwand durchführbare Trennung zwischen der Formaufspannplatte und der Schneckeneinheit gegeben.

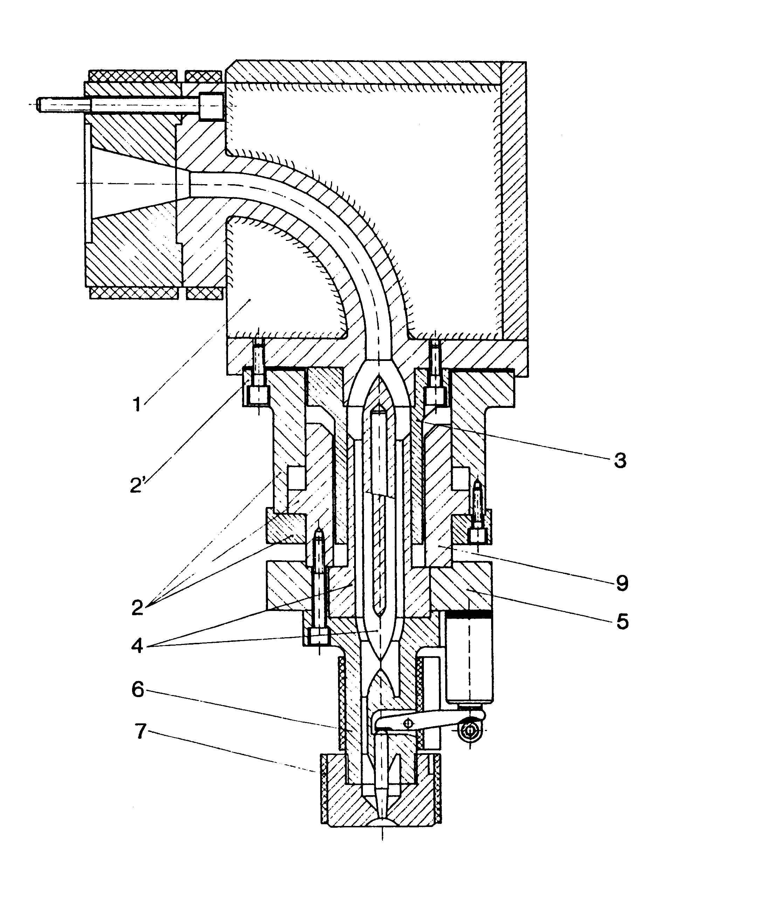

Ein Ausführungsbeispiel der Erfindung ist in der Zeichnung dargestellt und wird im folgenden näher beschrieben. Die einzige Figur zeigt einen Vertikalschnitt durch einen 90°-Adapter mit angeschlossenem in sich verfahrbaren Verschlußdüsensystem in Einspritzstellung.

An den 90°-Adapter 1 ist ein in Spritzrichtung in sich verfahrbares Verschlußdüsensystem fest angeordnet, wobei das erforderliche Schmelzeausgleichssystem durch das Hubvolumen der nicht dargestellten Schneckeneinheit gebildet ist. Das Verschlußdüsensystem ist aus einem Hydraulikzylinder 2 mit Flansch 2', einer innenliegenden Torpedoführungshülse 3 mit einem innenbeheizten verfahrbaren Torpedo 4 sowie einer verfahrbaren Düsenplatte 5 mit beheizbarer Verschlußdüse 6 gebildet. An der Verschlußdüse 6 ist eine äußere Heizung 7 angeordnet.

Wie die Figur zeigt, sind der Hydraulikzylinder 2 mit seinem Flansch 2' sowie die Torpedoführungshülse 3 an einem Montageflansch 8 des Adapters 1 lösbar ange-

0223074

schlossen. Der verfahrbare Kolben des Hydraulikzylinders 2 ist als Kolbenring 9 ausgebildet, auf dem die Düsenplatte 5 lösbar angeschlossen ist.

Die Erfindung macht sich zunutze, daß die Schneckeneinheit bekannterweise aus einem Zylinder und der Schnecke besteht, die zusammen in der Zylinderspitze über den Schneckenzylinder das Hubvolumen bilden. Nach Beendigung der Nachdruckphase erfolgt der hydraulische Schneckenrückzug, der wirkungsmäßig mit einem Kolben vergleichbar ist. Das beim Schneckenrückzug entstehende freie Hubvolumen dient zur Aufnahme des beim Verfahren des Verschlußdüsensystems rückfließenden Schmelzeanteils.

- Patentansprüche -

- 6 -

Aufstellung der Bezugszeichen:

1   Adapter
2   Hydraulikzylinder
2'  Flansch von 2
3   Torpedoführungshülse
4   Torpedo
5   Düsenplatte
6   Verschlußdüse
7   Heizung von 6
8   Montageflansch von 1
9   Kolbenring von 2

Patentanwalt
**Dipl.-Ing. Siegfried Schirmer**
Zugelassener Vertreter
vor dem Europäischen Patentamt

Osningstraße 18
4800 Bielefeld 1
Telefon (05 21) 29 57 62
18.09.1986
755/58-99

-7-

Anmelder:
Stübbe GmbH
Ismaninger Straße 67 a
8000 München 80

**Patentansprüche:**

1. Spritzgießmaschine zum Herstellen von Kunststoffteilen aus Thermoplasten, Duroplasten und/oder Elastomeren im Spritzgießverfahren oder Reaktionsspritzgießverfahren, mit einer Mehrstationen-Schließeinheit in horizontaler oder vertikaler Bauweise zur Aufnahme mehrerer Formen und mit einer zugeordneten Spritzeinheit zum gleichzeitigen Abspritzen der Formen, mit einer bewegbaren mittleren längs zur Schließrichtung geteilten Formaufspannplatte, deren beide Teile durch eine Schnellspannvorrichtung zusammengehalten sind und zwischen deren beiden Teilen ein Schmelzeleitsystem angeordnet ist, das eine oder mehrere separate Schmelzeleitschienen aufweist, wobei jede Schmelzeleitschiene an ihrer Stirnseite längs zur Fließrichtung der Schmelze fest zwischen der geteilt ausgebildeten Formaufspannplatte eingespannt ist und auf einem Flansch der Schmelzeleitschiene ein mittiger Zentrierbund und ein aufgeweiteter, gerundete Seitenwandungen aufweisender Schmelzeeintritt zur Aufnahme des jeweiligen Düsensystems angeordnet ist, dadurch gekennzeichnet, daß an die Schneckeneinheit ein rechtwinkliger Adapter (1) angeschlossen ist, an dem ein in Spritzrichtung in sich verfahrbares Verschlußdüsensystem fest angeordnet ist und das erforderliche Schmelzeausgleichssystem durch das Hubvolumen der Schneckeneinheit gebildet ist.

2. Spritzgießmaschine nach Anspruch 1, dadurch gekennzeichnet, daß das Verschlußdüsensystem aus einem Hydraulikzylinder (2) mit Flansch (2'), einer innenliegenden Torpedoführungshülse (3) mit einem innenbeheizten verfahrbaren Torpedo (4) sowie einer verfahrbaren Düsenplatte (5) mit beheizbarer Verschlußdüse (6) gebildet ist.

3. Spritzgießmaschine nach Anspruch 1 oder 2, dadurch gekennzeichnet, daß der Hydraulikzylinder (2) mit seinem Flansch (2') sowie die Torpedoführungshülse (3) an einem Montageflansch (8) des Adapters (1) lösbar angeschlossen sind.

4. Spritzgießmaschine nach einem der Ansprüche 1 bis 3, dadurch gekennzeichnet, daß der verfahrbare Kolben des Hydraulikzylinders (2) als Kolbenring (9) ausgebildet ist, auf dem die Düsenplatte (5) lösbar angeschlossen ist.

5. Spritzgießmaschine nach einem der Ansprüche 1 bis 4, dadurch gekennzeichnet, daß auf der Stirnseite der Schmelzeleitschiene eine starre Verschlußdüse angeordnet ist.

6. Spritzgießmaschine nach einem der Ansprüche 1 bis 5, dadurch gekennzeichnet, daß das der Schneckeneinheit zugeordnete Verschlußdüsensystem fest an die Schneckeneinheit angeschlossen ist und an den Stirnseiten des zum Verschlußdüsensystem gehörenden Adapters Führungsbahnen angeordnet sind.

7. Spritzgießmaschine nach einem der Ansprüche 1 bis 6, dadurch gekennzeichnet, daß den Führungsbahnen des Adapters zur Herstellung einer formschlüssigen Verbindung entsprechend ausgebildete Gegenbahnen in der mittleren geteilten bewegbaren Formaufspannplatte zugeordnet sind.